# EUROPEAN PATENT APPLICATION

(11) **EP 2 719 666 A1**
(43) Date of publication of application: **16.04.2014**
(21) Application number: 12306266.3
(22) Date of filing: 12.10.2012
(51) Int. Cl.: C01G 49/02, B82Y 30/00

(54) **New goethite-calcite composite, its preparation process and its use for the separations of ions**

(71) Applicant: Centre National de la Recherche Scientifique, 75794 Paris Cedex 16 (FR); Université Joseph Fourier, 38041 Grenoble Cedex 09 (FR)
(72) Inventor: Montes Hernandez, German, 38470 Vinay (FR); Renard, François, 38000 Grenoble (FR)
(74) Representative: Grosset-Fournier, Chantal Catherine

(57) **Abstract**

The present invention relates to new goethite-calcite composite, its preparation process and its use for the separations of ions.

## Description

The present invention relates to new goethite-calcite composite, its preparation process and its use for the separations of ions.

Goethite and calcite are two inorganic compounds that are widely studied due to their abundance in nature as minerals (abiotic origin) and biominerals (biotic origin). Both minerals can co-exist in several terrestrial environments such as deep geological formations, water aquifers, soils and aerosols, playing an important role on the fate and transport of several metalloids and heavy metals trace elements and organic molecules at the mineral-fluid interfaces (M. Wolthers, L. Charlet, P. Van Cappellen, The surface chemistry of divalent metal carbonate minerals. Am. J. Sci. 308 (2008) 905-941; J. Paquette, R. J. Reeder, Relationship between surface structure, growth mechanism, and trace element incorporation in calcite. Geochem. Cosmochem. Acta 59 (1995) 735-749; A. J. A. Aquino, D. Tunega, G. Haberhauer, M. H. Gerzabek, H. Lischka, Acid-base properties of a goethite surface model. A Theoretical view. Geochem. Cosmochem. Acta 72 (2008) 3587-3602; R. M. Cornell, U. Schwertmann, The Iron Oxides; VCH: Weinheim, Germany, 1996; O. Ozdemir, D. J. Dunlop, Intermediate formation of magnetite during dehydration of goethite. Earth Planet. Sci. Lett.177 (2000) 59-67).

Goethite and calcite minerals have also been identified in several extraterrestrial environments. For example, calcite has been recently discovered in Martian soils by Phoenix Mars exploration mission (W. V. Boynton, D. W. Ming, S. P. Kounaves, S. M. M. Young, R. E. Arvidson, M. H. Hecht, J. Hoffman, P. B; Niles, D. K. Hamara, R. C. Quinn, P. H. Smith, B. Sutter, D. C. Catling, R. V. Morris, Evidences for calcium carbonate at the Mars Phoenix landing site. Science 325 (2009) 61-64) and goethite has been suspected as a constituent of the Martian dusts and dark asteroids (R. V. Morris, G. Klingelhofer, C. Schroder, D. S. Radianor, A. Yen, D. W. Ming, P. A. De Souza, I. Fleischer, T. Wdowiak, R. Gellert, B. Bernhardt, E. N. Evlanov, B. Zubkov, J. Foh, U. Bonnes, E. Kankeleit, P. Gutlich, F. Renz, S. W. Squyres, R. E. Arvidson, Mösbauer mineralogy of rock, soil and dust at Gusev Crater, Mars. J. Geophys. Res. 111 (2006) E02S13; P. Beck, E. Quirico, D. Sevestre, G. Montes-Hernandez, A. Pommerol, B. Schmitt, Goethite as an alternative origin for the 3.1 micro-m band on dark asteroids. Astronomy & Astrophysics (2010) DOI: 10.1051/0004-6361/201015851). Moreover, the goethite and calcite minerals are technologically important materials and widely applied as components in various industrial products, e.g., pigments in the building industry; inorganic dyes; pigments and adsorbents in the paper industry, lacquers or plastics; sorbents in removal of toxic ions and molecules from polluted water; active ingredient in antacid tablets.

In the last decades, several synthesis routes have been proposed to produce independently goethite or calcite at laboratory or industrial scale, focusing on specific or multiple applications or simply to carry out basic research on the crystal growth processes (C. Domingo, E. Loste, J. Gomez-Morales, J. Garcia-Carmona, J. Fraile, Calcite precipitation by a high-pressure CO2 carbonation route. J. Supercrit. Fluids. 36 (2006) 202-215; H. S. Lee, T. H. Ha, K. Kim, Fabrication of unusually stable amorphous calcium carbonate in an ethanol medium. Mater. Chem. Phys. 93 (2005) 376-382; A. Abou-Hassan, O. Sandre, S. Neveu, V. Cabuil, Synthesis of goethite by separation of the nucleation and growth process of ferrihydrite nanoparticles using microfluidics. Angew. Chem. 121(2009) 2378-2381; T. Yu, J. Park, J. Moon, K. An, Y. Piao, T. Hyeon, Synthesis of uniform goethite nanotubes with parallelogram cross section. J. Am. Chem. Soc.129, (2007) 14558-14559; Schwertmann, P. Cambier, E. Murad, Properties of goethite of variying crystallinity. Clays Clay Miner.33 (1985) 369-378; M. Mohapatra, S. K. Gupta, B. Satpati, S. Anand, B. K. Mishra, pH and temperature dependent facile precipitation of nano-goethite particles in Fe(NO3)3-NaOH-NH3NH2HSO4-H2O medium. Colloids and Surfaces A: Physicochem. Eng. Aspects.355 (2010) 53-60; K. F. Hayes, A. L. Roe, G. E. Brown Jr., K. O. Hodgson J. O; Leckie, G. A. Parks, In situ x-ray absorption study of surface complexes: Selenium oxyanions on α-FeOOH. Science 238 (1987) 783-786; G. Montes-Hernandez, F. Renard, N. Geoffroy, L. Charlet, J. Pironon, Calcite precipitation from CO2-H2O-Ca(OH)2 slurry under high pressure of CO2. J. Crystal Growth. 308 (2007) 228-236; G. Montes-Hernandez, D. Daval, R. Chiriac, F. Renard, Growth of nanosized calcite through gas-solid carbonation of nanosized portlandite particles under anisobaric conditions. Cryst. Growth Des. 10 (2010) 4823-4830; L. A. Gower, D. A. Tirrell, Calcium carbonate films and helices growth in solutions of poly(aspartate). J. Crystal Growth.191 (1998) 153-160; E. J. Elzingan Y. J. Lee, R. J. Reeder, Coprecipitation of chromate with calcite: Batch experiments and X-ray absorption spectroscopy. Geochem. Cosmochem. Acta. 71 (2007) 1480-1493).

The studies to improve the existing methods and/or to develop innovative routes to obtain well-controlled shapes and sizes of nanometer-to-submicrometer goethite or calcite particles continue. Moreover, the nucleation and growth processes of goethite and calcite are still open subjects (K. F. Hayes, A. L. Roe, G. E. Brown Jr., K. O. Hodgson J. O; Leckie, G. A. Parks, In situ x-ray absorption study of surface complexes: Selenium oxyanions on α-FeOOH. Science 238 (1987) 783-786,) In a previous study (G. Montes-Hernandez, P. Beck, F. Renard, E. Quirico, B. Lanson, R. Chiriac, N. Findling, Fast precipitation of acicular goethite from ferric hydroxide gel under moderate temperature (30 and 70 C degrees). Cryst. Growth Des. 11 (2011) 2264-2272), it has been demonstrated that acicular goethite (α-FeOOH) can be precipitated when a high initial OH/Fe molar ratio (=5) and moderate temperature (30 and 70°C) are used, without the need to synthesize ferrihydrite and/or amorphous iron hydroxide precursors.

Nevertheless, the synthesis of goethite-calcite composite has not been reported in the literature.

One of the aims of the present invention is to provide a new goethite-calcite composite.

Another aim of the present invention is to provide a preparation process of a goethite-calcite composite.

Still another aim is the use of a goethite-calcite composite to remove toxic ions from water.

The present invention relates to a pure goethite calcite composite under crystal form comprising nanosized goethite particles and sub-micrometric calcite particles, substantially free of amorphous materials such as amorphous calcium carbonate, and free of goethite and calcite particles the size of which is higher than 1µm, the goethite/calcite particles weight ratio being comprised from 0.7 to 0.9, in particular 0.8.

The expression "goethite calcite composite" refers to goethite particles aggregated with calcite particles and/or (probably) included (or incorporated) in the calcite particles, that is intimate goethite calcite adhesion.

Said composite has an orange-brown color, is homogeneous, i.e. goethite particles and calcite particles are uniformly distributed, and said goethite particles and calcite particles are inseparable or indivisible after about 5 to 10 minutes of ultrasonic dispersion in a dispersant agent such as alcohol.

Thus said expression does not mean that said composite is composed of calcite particles and goethite particles simply mixed together.

The expression "pure goethite calcite composite" means that the purity of said composite is equal or higher than 96%, in particular 98%.

The expression "under a crystal form" means that said each particles of said composite is crystalline.

The term "nanosized" means particles having a size on the order of a nanometer up to a hundred of nanometers.

The term "sub-micrometric" means particles having a size of less than one micrometer. Nevertheless, it must be noted that nanosized particles are smaller than sub-micrometric particles.

The expression "substantially free of amorphous materials" means that amorphous materials can be present or not in the composite. Nevertheless, if amorphous materials are present, the total weight of amorphous materials is lower than 4% of the weight of the composite.

Amorphous materials can be for example amorphous calcium carbonate. Calcite corresponds to calcium carbonate but is a crystalline mineral in contrast to amorphous calcium carbonate.

The expression "free of goethite and calcite particles the size of which is higher than 1µm" means that there are neither goethite particles nor calcite particles on the order of micrometer or higher such as naturally existing.

Therefore, said calcite goethite composite does not correspond to a calcite goethite mineral such as found in the nature and said calcite goethite composite does not comprise particles of calcite-goethite mineral such as found in the nature.

The inventors have unexpectedly found that a calcite goethite composite which is different from a simple mixture of calcite particles and goethite particles could be obtained and which is different from a calcite goethite mineral such as found in the nature and having adsorption properties, in particular for removal toxic ions from waters, higher than calcite or goethite taken individually or higher than a mere mixture of calcite and goethite.

Said composite is predominantly composed of calcite and the weight ratio comprised from 0.7 to 0.9, in particular 0.8 can be determined by methods well known from a man skilled in the art, for example by thermogravimetric analyses (TGA).

In an advantageous embodiment, the present invention relates to a pure goethite calcite composite as defined above, wherein said composite is substantially free of hematite, portlandite, halite or calcium iron oxide chloride hydrate.

Hematite corresponds to Fe₂O₃, portlandite corresponds to Ca(OH)₂, halite corresponds to NaCl and calcium iron oxide chloride hydrate corresponds to Ca₂FeO₃Cl,5H₂O.

Said hematite, portlandite, halite or calcium iron oxide chloride hydrate are raw materials or side products of the composite process and therefore can be present in said composite.

The expression "substantially free of hematite, portlandite, halite or calcium iron oxide chloride hydrate" means that they are present or not in said composite.

The total weight of hematite, portlandite, halite or calcium iron oxide chloride hydrate is lower than 4% of the total composite weight, including the amorphous materials above defined which is possibly present.

In an advantageous embodiment, the present invention relates to a pure goethite calcite composite as defined above, wherein said composite has a specific surface area comprised from about 10 m²/g to about 200 m²/g, preferably from about 40 m²/g to about 200 m²/g, in particular from about 40 m²/g to about 100 m²/g, as determined by N₂ adsorption isotherms.

By "specific surface area" is meant the total surface area of a material per unit of mass.

The specific surface area can be determined by methods well known from a man skilled in the art, for example by using the conventional Brunauer-Emmet-Teller method on N₂ sorption isotherms.

One of the advantages of the present invention is to provide composite presenting a high specific surface area providing.

In function of the temperature of the preparation process of the composite, the specific surface area obtained is variable.

The higher the temperature is, the lower the specific surface area is.

In an advantageous embodiment, the present invention relates to a pure goethite calcite composite as defined above, wherein said specific surface area is about 92 m²/g, as determined by N₂ adsorption isotherms.

Said specific surface area corresponds to the one obtained for a composite synthesized at a temperature process of 30°C for all the steps of said process.

In an advantageous embodiment, the present invention relates to a pure goethite calcite composite as defined above, wherein said composite has a specific surface area comprised from about 10 m²/g to about 200 m²/g, preferably from about 40 m²/g to about 200 m²/g, in particular from about 40 m²/g to about 100 m²/g, preferably about 92 m²/g, wherein:
the average length of said goethite particles is comprised from about 200 nm to about 280 nm, in particular about 240 nm,
the average width of said goethite particles is comprised from about 32 nm to about 48 nm, in particular about 40 nm, and
the average diagonal of calcite particles is comprised from about 160 nm to about 220 nm, in particular about 190 nm,
as determined by field emission gun scanning electron microscope.

The average particle size (length and width for goethite and diagonal for calcite) has been measured manually on isolated particles using a Zeiss Ultra 55 field emission gun scanning electron microscope (FESEM).

In an advantageous embodiment, the present invention relates to a pure goethite calcite composite as defined above, wherein said composite has a specific surface area of about 92 m²/g, with an average length of said goethite particles comprised from about 200 nm to about 280 nm, in particular about 240 nm, an average width of said goethite particles comprised from about 32 nm to about 48 nm, in particular about 40 nm, and an average diagonal of calcite particles comprised from about 160 nm to about 220 nm, in particular about 190 nm, as determined by field emission gun scanning electron microscope,
wherein the removal capacity of toxic ions from water, such as Cu, Cd, As, Se, with the proviso that Se(VI) is excluded, is comprised from 0.5 to 0.1 after at least 20 hours of contacting said toxic ions with pure goethite calcite composite at a pH of said water comprised form 6 to 9.4.

Water containing toxic ions can be for example polluted water.

The removal capacity corresponds to the ratio C/C₀, wherein C corresponds to the ion concentration to remove remaining in water after contacting said composite with said water containing said toxic ions and C₀ is the ion concentration present initially in water before contacting said composite with said water containing said toxic ions.

The specific surface area determines the removal capacity of said composite.

The higher the specific surface area, the higher the removal capacity is.

In an advantageous embodiment, the present invention relates to a pure goethite calcite composite as defined above, wherein said specific surface area is about 45 m²/g, as determined by N₂ adsorption isotherms.

Said specific surface area corresponds to the one obtained for a composite synthesized at a temperature process of 70°C for all the steps of said process.

In an advantageous embodiment, the present invention relates to a pure goethite calcite composite as defined above, wherein said composite has a specific surface area comprised from about 10 m²/g to about 200 m²/g, preferably from about 40 m²/g to about 200 m²/g, in particular from about 40 m²/g to about 100 m²/g, preferably about 92 m²/g, wherein:
the average length of said goethite particles is comprised from about 650 nm to about 750 nm, in particular about 700 nm,
the average width of said goethite particles is comprised from about 55 nm to about 95 nm, in particular about 75 nm, and
the average diagonal of calcite particles is comprised from about 160 nm to about 220 nm, in particular about 190 nm,
as determined by field emission gun scanning electron microscope.

In another aspect, the present invention relates to a process of preparation of a pure goethite calcite composite such as defined above, comprising a step of contacting a goethite particles-portlandite aqueous suspension with a CO₂ source in a medium having a pH higher than 12, in particular 12.2, at a T3 temperature comprised from about 25°C to about 100°C, during a t₃ time comprised from about 1h to about 24h, in particular 8h.

The expression "goethite particles-portlandite aqueous suspension" refers to a suspension containing:
crystal goethite particles composed of nanosize particles substantially free of amorphous materials such as amorphous calcium carbonate, and free of goethite and calcite particles the size of which is higher than 1 µm, and
portlandite,
in an aqueous medium.

Goethite particles can be from commercial origin provided they are nanosized goethite particles, or goethite can be synthesized *in situ* by reaction, for instance of FeCl₃ with an alkali metal hydroxide such as NaOH.

Portlandite can be commercial portlandite or *in situ* synthesized portlandite by reaction of calcium chloride with a alkali metal hydroxide such as NaOH in water leading to an instantaneous precipitation of portlandite (Ca(OH)₂), in particular nanosized portlandite, according to the following reaction :

2NaOH + CaCl₂→Ca(OH)₂+ 2NaCl.

Preferably, the aqueous medium is water and preferably said water contains only the compounds introduced or synthesized, i.e. goethite particles, portlandite, NaOH and CO₂.

Preferably the temperature is 30°c or 70°C depending on the composite to prepare, in particular on the specific surface area that is wanted.

Below 25°C, the reaction is too slow.

100°C corresponds to the boiling point of water.

In an advantageous embodiment, the goethite particles present in said suspension have an average length comprised from about 200 nm to about 280 nm, in particular about 240 nm, and an average width comprised from about 32 nm to about 48 nm, in particular about 40 nm.

In an advantageous embodiment, the present invention relates to a process of preparation of a pure goethite calcite composite, defined above, wherein the CO₂ source in the medium is at an initial pressure comprised from about 10 bar to about 30 bar, in particular 20 bar.

The CO₂ source can be pure or concentrated CO₂ gas, i.e. CO₂ gas containing a small proportion of SOₓ or NOₓ, or a stream containing a low concentration of CO₂ gas such as flue gas or industrial off-gas or a mixture of CO₂ gas with an inert gas such as, for example, nitrogen, argon or air.

By "initial pressure" is meant the pressure of the CO₂ source when it is introduced into the alkaline medium.

The pressure used for the carbonation reaction is an anisobaric pressure that means that the pressure is not constant during the carbonation reaction, i.e. variable between the beginning and the end of the process. As the CO₂ source is consumed, CO₂ pressure drops in the system, i.e. the apparatus containing the reaction medium.

Alternatively, an isobaric pressure can be used, i.e. at a constant CO₂ pressure during the reaction, by introducing CO₂ as soon as it is consumed.

Below 10bar, the pressure is too low to obtain a good rate of carbonation reaction.

Above 30bar, the pressure becomes too high to be interesting in view of the cost for a production at industrial scale.

In an advantageous embodiment, the present invention relates to a process of preparation of a pure goethite calcite composite, defined above, comprising further before the step of contacting said goethite particles-portlandite suspension with a CO₂ source, a step of contacting a goethite particle suspension with CaCl₂ in a medium having a pH higher than 12, in particular 13.5 and containing a base, in particular NaOH, at a T2 temperature comprised from about 25°C to about 100°C, during a t₂ time comprised from about 30 minutes to about 2h, in particular 1h.

Said base is an alkali metal hydroxide base and in particular NaOH.

In this embodiment, the portlandite is synthesized *in situ* by reaction of an alkali metal hydroxide base, in particular NaOH with a CaCl₂ that has been introduced in an alkaline medium containing goethite particles suspension.

The medium is an aqueous medium, in particular water in which goethite particles are in suspension, i.e. goethite particles are not soluble in the medium used, and containing an alkali metal hydroxide base, in particular NaOH.

Goethite particles can be from commercial origin provided they are nanosized goethite particles, or goethite can be synthesized *in situ* by reaction, for instance, of FeCl₃ with an alkali metal hydroxide such as NaOH.

Preferably the temperature is 30°c or 70°C depending on the composite to prepare, in particular on the specific surface area that is wanted.

Preferably, T2 temperature is equal to T3 temperature above defined.

Below 25°C, the reaction is too slow.

100°C corresponds to the boiling point of water

The time t₂ is very short, about 1h, because once CaCl₂ is introduced in the suspension of goethite particle in a medium containing an alkali metal hydroxide, said alkali metal hydroxide reacts with CaCl₂ to form portlandite, in particular nanosized portlandite, to give goethite particles-portlandite suspension.

In an advantageous embodiment, the present invention relates to a process of preparation of a pure goethite calcite composite, defined above, comprising further before the step of contacting goethite particle suspension with CaCl₂, a step of introducing FeCl₃ in a medium having a pH higher than 12, in particular 13.5 and containing a base, at a T1 temperature comprised from about 25°C to about 100°C, during a t₁ time comprised from about 1h to about 30h, in particular 24h.

The medium is an aqueous medium, in particular water, and containing an alkali metal hydroxide base, in particular NaOH.

In this embodiment, goethite articles are synthesized in situ by reaction of FeCl₃ with said alkali metal hydroxide base, in particular NaOH to give goethite that precipitates in said medium to give a suspension of nanosized particles.

Preferably the temperature is 30°c or 70°C depending on the composite to prepare, in particular on the specific surface area that is wanted.

Preferably, T1 temperature is equal to T2 and/or T3 temperature above defined.

Below 25°C, the reaction is too slow.

100°C corresponds to the boiling point of water

In an advantageous embodiment, the present invention relates to a process of preparation of a pure goethite calcite composite, comprising further before the step of contacting goethite particle suspension with CaCl₂, a step of introducing FeCl₃ in a medium having a pH higher than 12, in particular 13.5 and containing a base, at a T1 temperature comprised from about 25°C to about 100°C, during a t₁ time comprised from about 1h to about 30h, in particular 24h, defined above,
wherein said base is selected from the group consisting of NaOH, KOH, LiOH, Ca(OH)₂ and RbOH, or a mixture thereof, preferentially NaOH, preferably at a molar ratio NaOH/FeCl₃ comprised from 3 to 10, in particular 5.

Preferentially, the base is an alkali metal hydroxide base, in particular NaOH and preferably the molar ratio NaOH/FeCl₃ is in particular 5.
The overall reaction of synthesis of said goethite calcite composite starting, for example, from FeCl₃ is the following:

FeCl₃ + CaCl₂ + 5 NaOH + CO₂ → FeO(OH) + CaCO₃ + 5 NaCl + 2 H₂O

In this embodiment, goethite as well as portlandite as well as calcite are in situ synthesized.

In another embodiment, goethite used is from a commercial source and thus, a necessary molar ratio base/FeO(OH), in particular NaOH/FeO(OH), is 2,.

The overall reaction is then:

FeO(OH) + CaCl₂ + 2 NaOH + CO₂ → FeO(OH) + CaCO₃ + 5 NaCl + 2 H₂O

In this embodiment, portlandite as well as calcite are in situ synthesized and goethite is from a commercial source.

In another embodiment, portlandite used is from a commercial source and thus, a necessary molar ratio base/FeCl₃, in particular NaOH/ FeCl₃ is 3.

The overall reaction is then:

FeCl₃ + Ca(OH)₂ + 3 NaOH + CO₂→FeO(OH) + CaCO₃ + 3 NaCl + 2 H₂O

In this embodiment, goethite as well as calcite are in situ synthesized and portlandite is from a commercial source.

In another embodiment, goethite and portlandite used are from a commercial source and thus, the base is portlandite, and thus, a necessary molar ratio base (Ca(OH)₂/FeO(OH) is 1.

The overall reaction is then:

FeO(OH) + Ca(OH)₂ + CO₂ →FeO(OH) + CaCO₃ + H₂O

In this embodiment, only calcite is in situ synthesized and goethite as well as portlandite are from a commercial source.

In an advantageous embodiment, the present invention relates to a process of preparation of a pure goethite calcite composite, defined above, comprising the following steps:
a. introducing FeCl₃ in a medium having a pH higher than 12, in particular 13.5 and containing a base, in particular NaOH, at a T1 temperature comprised from about 25°C to about 100°C, during a t₁ time comprised from about 1h to about 30h, in particular 24h, to obtain a goethite particle suspension;
b. contacting said goethite particle suspension with CaCl₂ to obtain a goethite particle-CaCl₂ suspension and heat said goethite particle-CaCl₂ suspension at a T2 temperature comprised from about 25°C to about 100°C, during a t₂ time comprised from about 30 minutes to about 2h, in particular 1h, to obtain said goethite particles-portlandite suspension;
c. contacting said goethite particles-portlandite suspension with a CO₂ source at a T3 temperature comprised from about 25°C to about 100°C, during a t₃ time comprised from about 1h to about 30h, in particular 24h to obtain said goethite calcite composite.

In this embodiment, goethite as well as portlandite as well as calcite are in situ synthesized.

The goethite-calcite composite synthesis is summarized by three sequential precipitation reactions:
(1) Fast precipitation of nanosized acicular goethite (α-FeOOH) using high OH/Fe molar ratio (=5);
(2) Instantaneous precipitation of nanosized portlandite (Ca(OH)₂) by adding CaCl₂ salt into goethite alkaline suspension, and;
(3) Sub-micrometric calcite precipitation by injection of CO₂ into goethite-portlandite alkaline suspension.

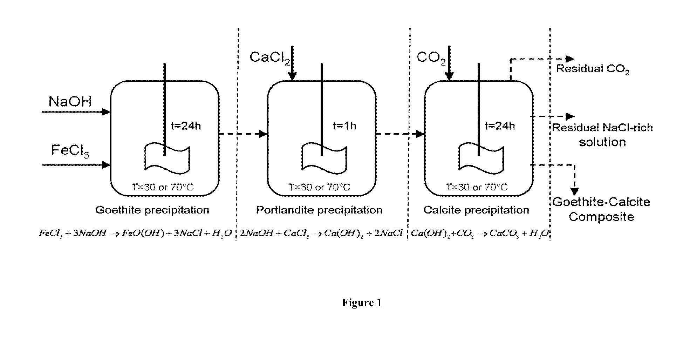

Figure 1 displays a schematic representation of goethite-calcite synthesis, summarizing the three sequential precipitation reactions. These three steps are detailed below.

Herein, the goethite formation is characterized by the presence of three successive pH domains, that are specifically associated to (I) the formation of ferric hydroxide gel (FeHgel), leading to acid conditions (pH<2.5); (II) the spontaneous nucleation of goethite from FeHgel, leading to alkaline conditions (pH>11) and; (III) the growth of goethite in alkaline conditions (11<pH<13.5). These three steps or pH domains during goethite formation are well correlated with colour evolution and the global reaction implying the three above steps can be written as:

*FeCl*₃ *+* 3*NaOH →FeO(OH) +* 3*NaCl + H*₂*O* (1)

In this system, the growth of goethite takes place in alkaline conditions after the spontaneous nucleation from ferric hydroxide gel because an excess of sodium hydroxide (NaOH) was initially imposed in the system. The residual NaOH during goethite formation was used to produce instantaneously nanosized portlandite by adding the calcium chloride (CaCl₂) into the goethite alkaline suspension that allows the fast precipitation of portlandite (calcium hydroxide) and then the pH is stabilized to 12.2. The global reaction of portlandite precipitation (Ca(OH)₂), well known in the laboratory and at industrial scales, can be expressed as:

2*NaOH + CaCl*₂ *→ Ca(OH)*₂ *+* 2*NaCl* (2)

Calcite precipitation or portlandite carbonation is the last step in the synthesis of goethite-calcite nanocomposite. For this case, the gas CO₂ was directly injected into the portlandite-goethite alkaline suspension. The CO₂ dissolution in alkaline conditions (*CO*₂ + *H*₂*O → + CO₃²⁺* + 2*H*⁺) produces a simultaneous consumption/dissolution of calcium hydroxide (*Ca*(*OH*)₂ *→ Ca*²⁺ + 2*OH*⁻), leading to the precipitation of sub-micrometric calcite until then a thermodynamic equilibrium calcite-solution-CO₂ is obtained. The global aqueous carbonation reaction of calcium hydroxide or calcite precipitation can be expressed as:

*Ca(OH)*₂+*CO*₂ *→ CaCO*₃ + *H*₂O (3)

This neutralization reaction implies a decrease of pH from 12.2 to 6.5 into the solution; which does not promote dissolution of pre-existent goethite because this mineral is stable in a broad range ofpH (3-13.5).

In step a. the base is an alkali metal base, in particular NaOH and the molar ratio base/FeCl₃, in particular NaOH/FeCl₃ is 5.

Each step a, b, c can be carried out at three different temperatures T1, T2 and T3 comprised from 25°C to 100°C.

In an advantageous embodiment, the present invention relates to a process of preparation of a pure goethite calcite composite, comprising the three steps defined above:
wherein said T1, T2 and T3 temperatures are all about 70°C and the specific surface area of said pure goethite calcite composite is about 92 m²/g, as determined by N₂ adsorption isotherms, or said T1, T2 and T3 temperatures are all about 30°C and the specific surface area of said pure goethite calcite composite is about 45 m²/g, as determined by N₂ adsorption isotherms.

Thus, depending on the temperature, composites with various specific surface area can be obtained.

In an advantageous embodiment, the present invention relates to one of the processes of preparation of a pure goethite calcite composite, defined above, wherein said composite is substantially free of hematite, portlandite, halite or calcium iron oxide chloride hydrate.

Said hematite, portlandite, halite or calcium iron oxide chloride hydrate are raw materials or side products of the composite process and therefore can be present in said composite.

The expression "substantially free of hematite, portlandite, halite or calcium iron oxide chloride hydrate" means that they are present or not in said composite.

The total weight of hematite, portlandite, halite or calcium iron oxide chloride hydrate is lower than 4% of the total composite weight, including the amorphous materials above defined eventually present.

In another aspect, the present invention relates to the use of a pure goethite calcite composite defined above, for the removal of toxic ions from water.

By toxic ions, it must be understood metal ions, for example but without being limited to them, Pb, Cd, Zn, Cr, Cu, Hg, Se, Sb, As, Sn, Te, T1, and Ni

Water containing said ions can be for example polluted water, or waste water from a plant.

In an advantageous embodiment, the present invention relates to the use defined above, wherein said toxic ions are selected from the group consisting of Cu, Cd, As, Se, with the proviso that Se(VI) is excluded.

Another advantage of the invention is that the removal capacity (defined above as C/C₀) for goethite-calcite composite is better or equivalent compared with pure goethite, with a further main improvement that the composite is easier to separate from fluid because of the aggregation of goethite with calcite particles.

Se (VI) is excluded because said composite, as well as goethite, are not liable to remove said ion.

In an advantageous embodiment, the present invention relates to the use wherein said toxic ions are selected from the group consisting of Cu, Cd, As, Se, with the proviso that Se(VI) is excluded, defined above,
wherein said removal is a simultaneous removal of at least two toxic ions, in particular Cu(II)-Cd (II) or As(III)-Se(IV).

Another advantage of the invention is that said composite is liable to remove more than one ion at the same time.

In an advantageous embodiment, said removal is a simultaneous removal of two toxic ions selected from the group consisting of Cu(II)-Cd (II), or As(III)-Se(IV).

In an advantageous embodiment, the present invention relates to the use defined above, wherein said removal is liable to separate at least one ion from the Se(VI) ion, in particular at least one ion selected from the group consisting ofCu(II)-Cd (II), As(III), Se(IV).

As said composite cannot remove Se(VI) from water, said composite can therefore be used to selectively remove at least one ion from Se(VI) contained in the same water.

In an advantageous embodiment, the present invention relates to the use defined above, wherein the specific surface area of said pure goethite calcite composite is comprised from about 10 m²/g to about 200 m²/g, preferably from about 40 m²/g to about 200 m²/g, in particular from about 40 m²/g to about 100 m²/g, in particular about 92 m²/g.

The removal capacity is function of the specific surface area.

The highest the specific surface area is, the highest the removal capacity is.

In an advantageous embodiment, the present invention relates to the use wherein the specific surface area of said pure goethite calcite composite is about 92 m²/g, defined above, wherein the removal capacity is comprised from 0.5 to 0.1 after at least 20 hours of contacting said toxic ions with pure goethite calcite composite at a pH of said polluted water comprised form 6 to 9.4.

In an advantageous embodiment, the present invention relates to the one of the use defined above, wherein the concentration of said composite in said water is comprised from about 1 g/L to about 100g/L, preferably from about 1 g/L to about 50g/L, more preferably from about 1 g/L to about 10g/L, in particular about 3g/L and the concentration of each ion present in water is comprised from about 25 to about 100 mg atom/L, in particular about 50 mg atom/L.

In another aspect, the present invention relates to a process of removal of at least one toxic ion form water, with the proviso that Se(VI) is excluded, comprising the following steps :
a. contacting water introduced in a reactor and containing at least one toxic ion, in particular two toxic ions, with a goethite calcite composite defined in claims 1 to 7, during 10 to 30 hours, in particular 20 hours, at room temperature, to obtain said ions adsorbed on said composite,
b. filtering said composite with adsorbed ions to remove said ions from water.

In an advantageous embodiment, the present invention relates to a process defined above wherein:
the quantity of water in said reactor is from 100 ml to 2L, in particular 1L of water,
each ion is at a concentration comprised from about 25 to about 100 mg atom/L, in particular about 50 mg atom/L,
goethite calcite composite is at a concentration comprised from about 1 g/L to about 100g/L, preferably from about 1 g/L to about 50g/L, more preferably from about 1 g/L to about 10g/L, in particular about 3g/L.

In an advantageous embodiment, the present invention relates to a process defined above wherein said ions are selected from the group consisting of: Pb, Cd, Zn, Cr, Cu, Hg, Se, Sb, As, Sn, Te, T1, and Ni, in particular Cu, Cd, As, Se, more particularly Cu(II)-Cd (II) or As(III)-Se(IV).

In another aspect, the present invention relates to the use of a pure goethite calcite composite defined above, as components in various industrial products, e.g., pigments in the building industry; inorganic dyes; pigments and adsorbents in the paper industry, lacquers or plastics).

### DESCRIPTION OF FIGURES

**Figure 1** presents the schematic diagram of sequential precipitation reactions for synthesis of goethite-calcite composite.
**Figure 2A to 2D** present two FESEM images of goethite-calcite composite synthesized according to the invention at 30°C and 70°C

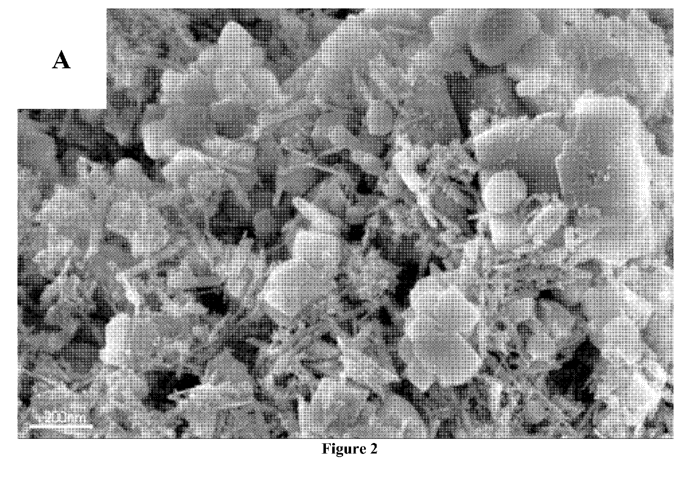

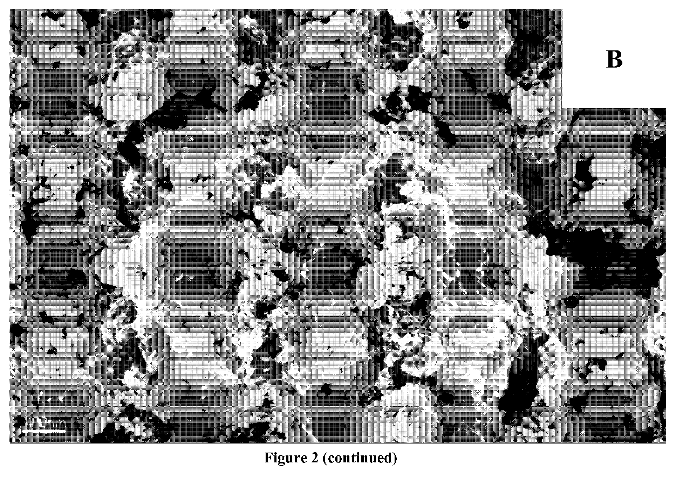

**Figure 2A** **and** **2B****:** composite 30°C at two different magnifications (figure 2A : 200 nm and figure 2B: 400 nm).

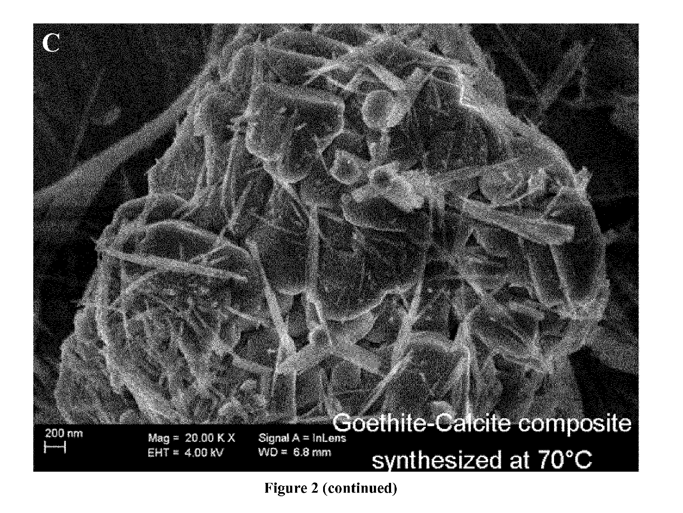

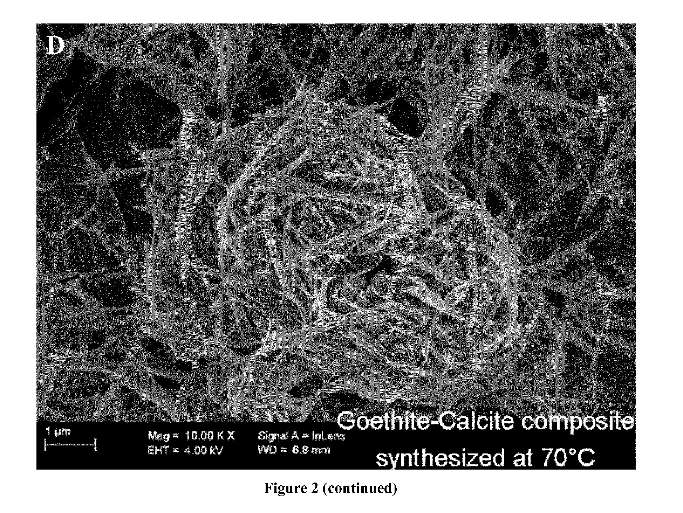

**Figure 2C** **and** **2D** composite 70°C at two different magnifications (figure 2C : 200 nm and figure 2D : 1 µm).

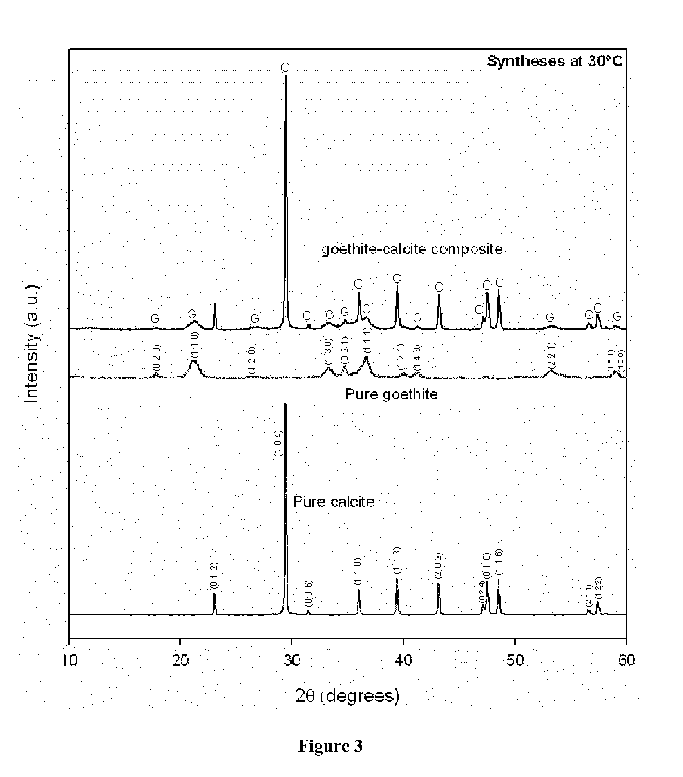

**Figure 3** presents the X-ray diffraction (XRD) patterns of pure goethite, pure calcite and goethite-calcite composite according to the invention synthesized at 30°C. Pure calcite and goethite were indexed from XRD patterns 00-005-0586 and 01-081-0464, respectively.
   G: goethite and C: calcite.

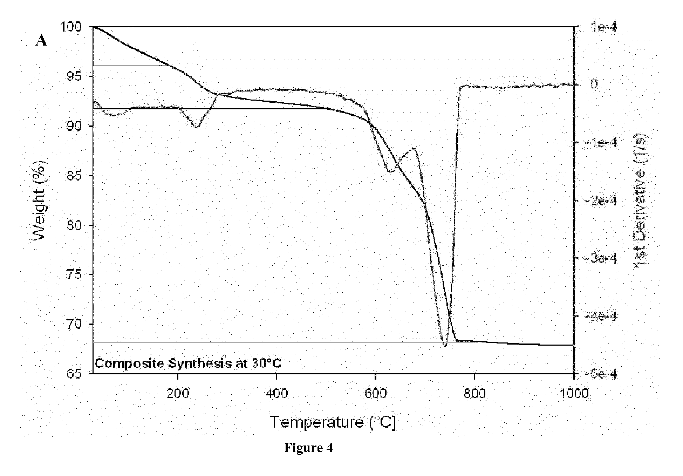

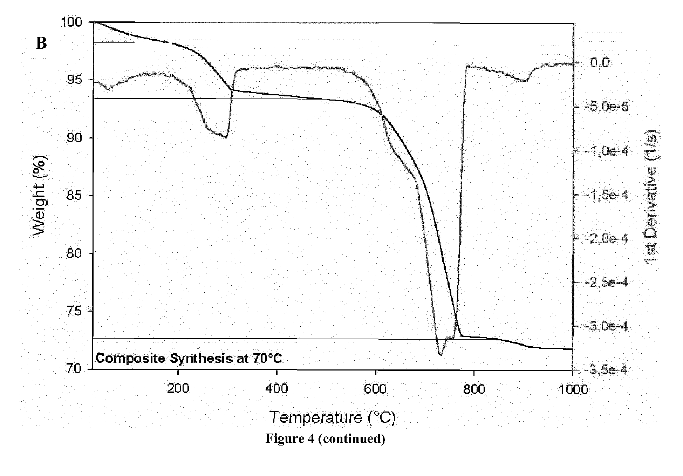

**Figure 4A** **and** **4B** present the thermogravimetric analyses for goethite-calcite composites synthesized at 30°C (figure 4A) and at 70°C (figure 4B); including in both cases the first derivative curve (or differential themogravimetric analysis).
**Figure 4A****:**
   x-axis: temperature (°C)
   y-axis: (left: weight (%), right: first derivative (1/s))
   Area between 100 and 96 (weight %): Removal of molecular water (adsorbed and/or confined in pores).
   Area between 96 and 92 (weight %): Dehydroxylation of goethite

   (2FeO(OH) → Fe₂O₃ + H₂O

   Area between 92 and 68 (weight %): Decarbonation of calcite

   CaCO₃ → CaO + CO₂
**Figure 4B****:**
   x-axis: temperature (°C)
   y-axis: (left: weight (%), right: first derivative (1/s))
   Area between 100 and 98 (weight %): Removal of molecular water (adsorbed and/or confined in pores).
   Area between 98 and 93 (weight %): Dehydroxylation of goethite:

   (2FeO(OH) → Fe₂O₃ + H₂O

   Area between 92 and 68,5 (weight %): Decarbonation of calcite:

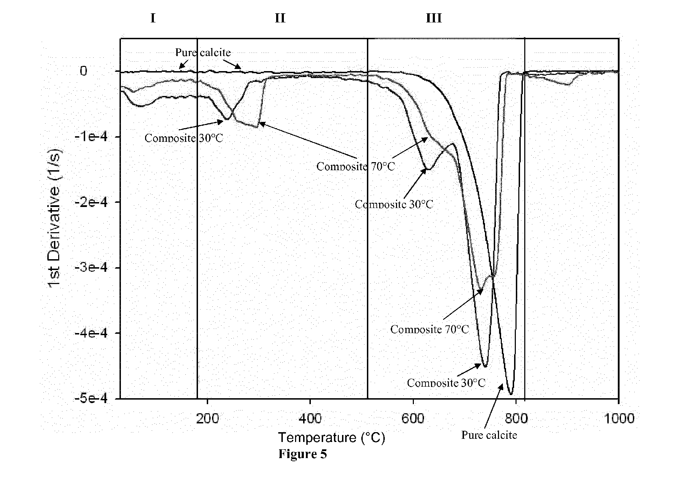

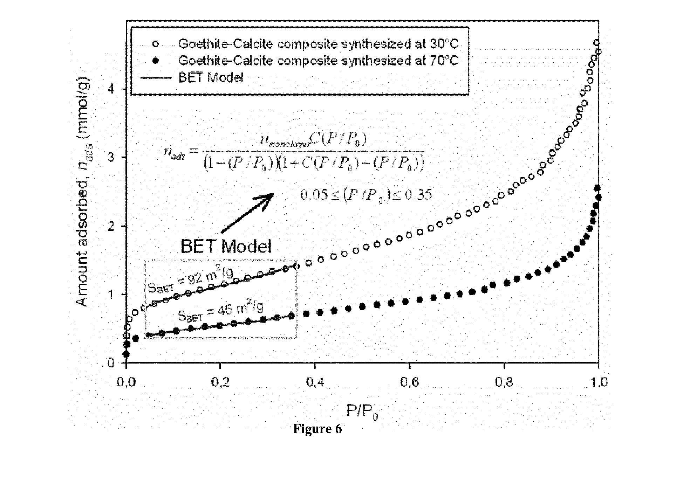

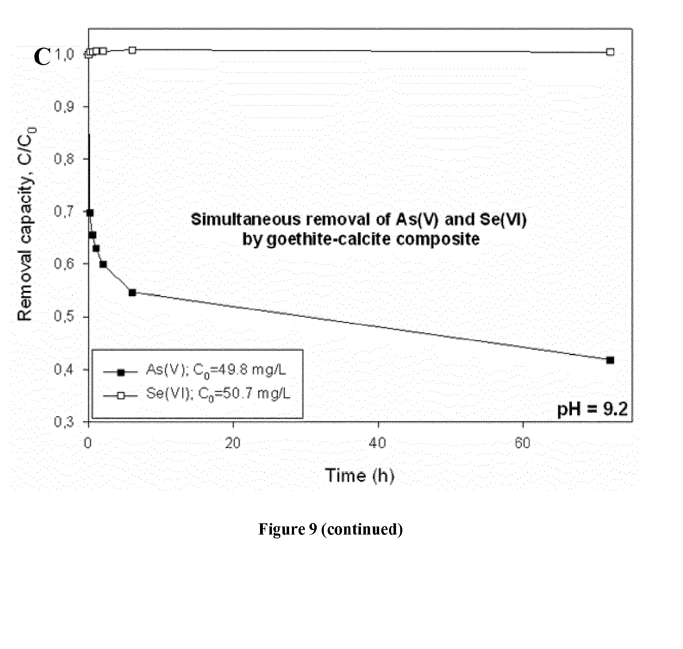

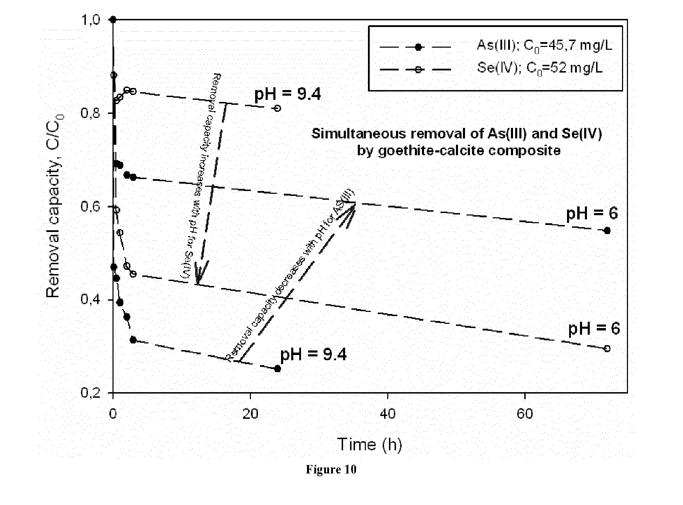

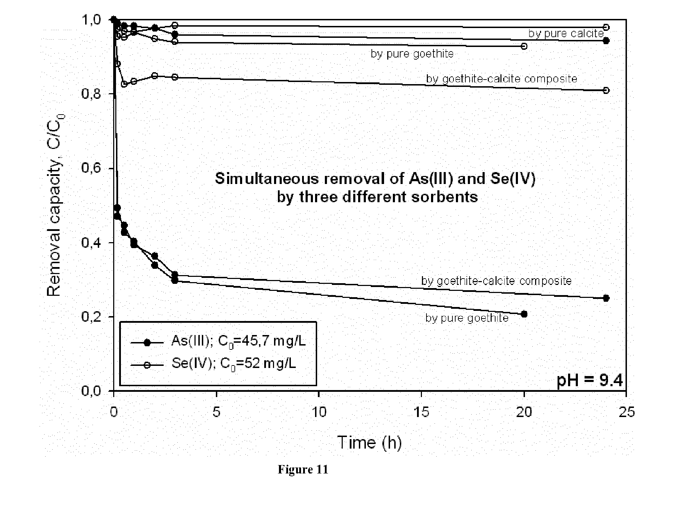

   CaCO₃ → CaO + CO₂
**Figure 5** presents the first derivative TG curves (DTG) for pure calcite and goethite-calcite composites synthesized at 30°C according to the invention (composite 30°C) and synthesized at 70°C according to the invention (composite 70°C) showing a complex decarbonation of calcite contained in composites.
   Area I: Removal of molecular water (adsorbed and/or confined in pores).
   Area II: Dehydroxylation of goethite: (2FeO(OH) → Fe₂O₃ + H₂O
   Area III: Decarbonation of calcite: CaCO₃ → CaO + CO₂
**Figure 6** presents the N₂ experimental sorption isotherms for goethite-calcite composites synthesized at 30 and 70°C and BET model fitting the experimental data between 0.05 and 0.35 of relative pressure.
   x-axis: P/Po
   y-axis: amount adsorbed, *n*_{ads} (mmol/g)
   White circles: composite synthesized at 30°C
   Black circles: composite synthesized at 70°C
   Line between circles: BET model.

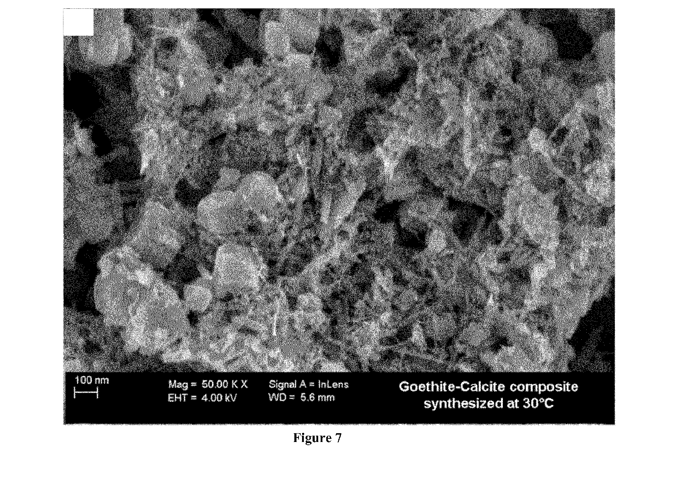

**Figure 7** presents the FESEM image showing intimate cohesion/aggregation between goethite and calcite particles in the composite synthesized at 70°C.

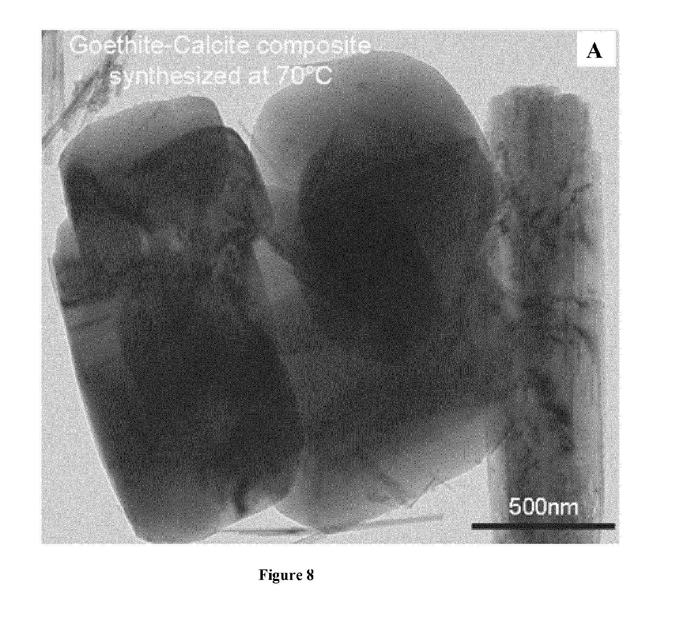

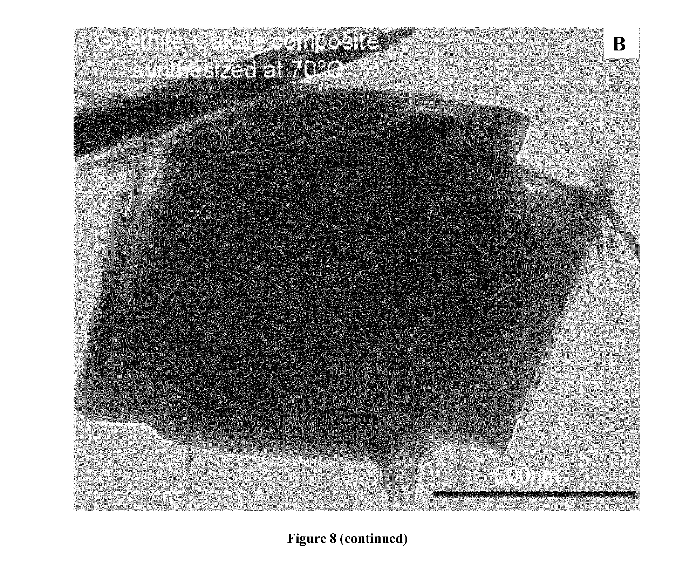

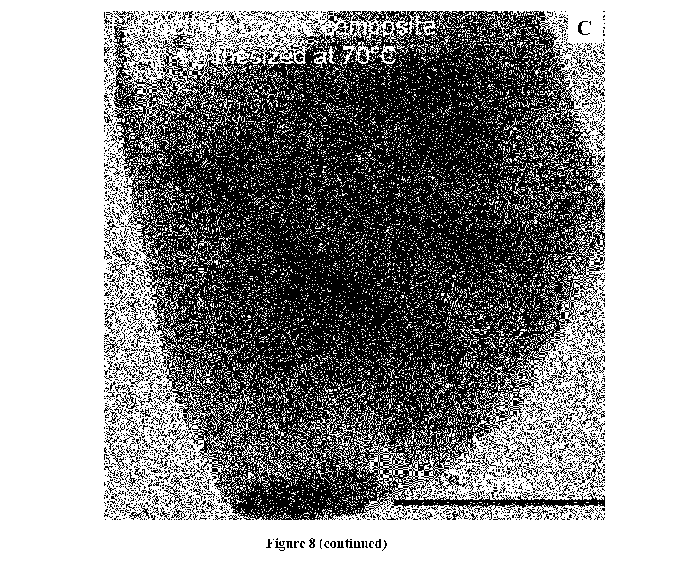

**Figure 8A to 8C** presents the TEM images showing intimate cohesion/aggregation between goethite and calcite particles in the composite synthesized at 70°C.

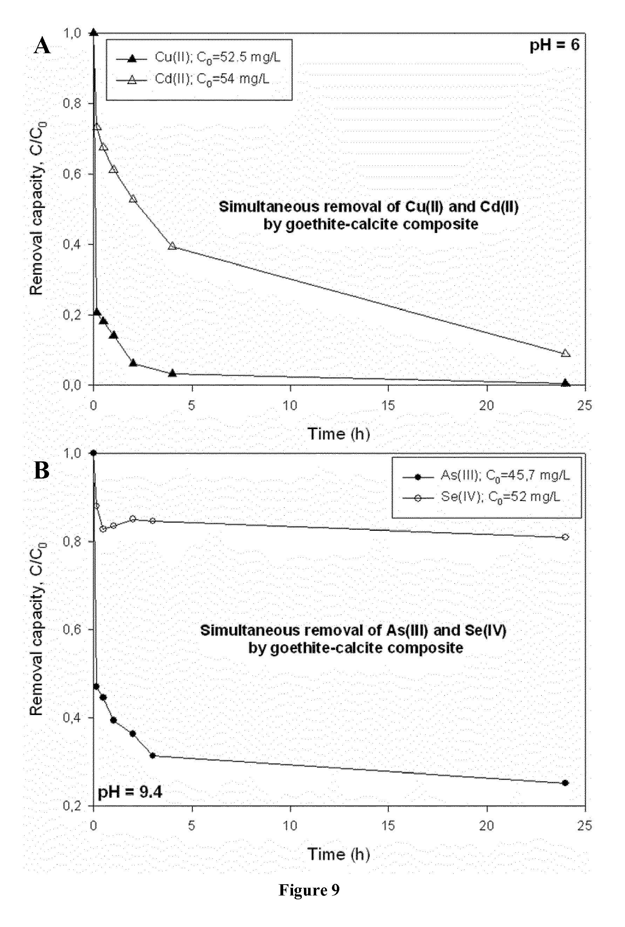

**Figure 9A to 9C** present the simultaneous removal of two toxic ions (i.e. binary-element systems) from synthetic wastewater via sorption process onto goethite-calcite composite synthesized at 30°C. Three different binary-ions systems are reported.
**Figure 9A****:** removal of Cu²⁺ (C₀ = 52.5 mg/L)-Cd²⁺(C₀ = 54 mg/L) at pH 6.
   x-axis: Time (hours)
   y-axis Removal capacity C/Co
**Figure 9B****:** removal of arsenite-selenite (As(III), C₀ = 45.7 mg/L)-Se(IV), (C₀ = 52 mg/L) at pH 9.4.
   x-axis: Time (hours)
   y-axis Removal capacity C/Co
**Figure 9C****:** removal of arsenate-selenate (As(V), C₀ = 49.8 mg/L)-Se(VI), C₀ = 50.7 mg/L) at pH 9.2.
   x-axis: Time (hours)
   y-axis Removal capacity C/Co
**Figure 10** presents the pH effect on the simultaneous removal of arsenite (As(III), C₀ = 45.7 mg/L) and selenite (Se(IV), C₀ = 52 mg/L) from water by using goethite-calcite composite synthesized at 30°C as sorbent.
   x-axis: Time (hours)
   y-axis Removal capacity C/Co
   From top to bottom: line with white circles: Se(IV), pH9.4; line with black circles: As(III), pH 6; line with white circles: Se(IV), pH 6; line with black circles As(III), pH9.4.
   For Se(IV), removal capacity decreases with pH
   For As(III), removal capacity increases with pH
**Figure 11** presents the simultaneous removal of arsenite (As(III)) and selenite (Se(IV)) from water by using goethite-calcite composite synthesized at 30°C, pure goethite and pure calcite (pH 9.4).
   x-axis: Time (hours).
   y-axis Removal capacity C/Co.
   From top to bottom:
   White circles and black circles: pure calcite; white circle: pure goethite; white circle: composite 30°C; black circle: composite 30°C, black circle: pure goethite.

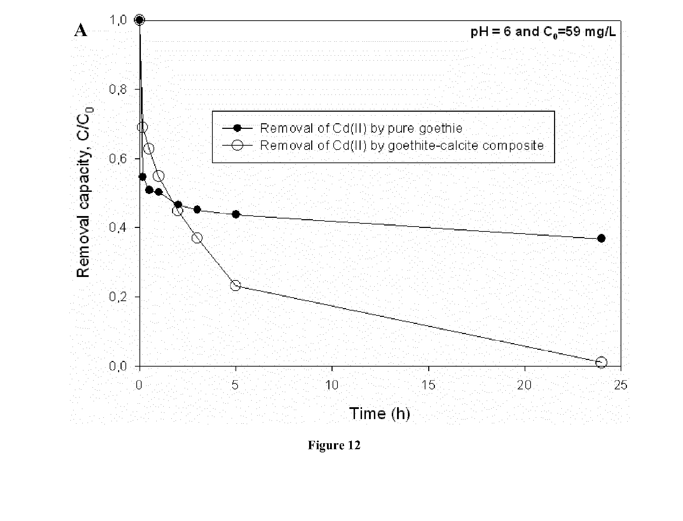

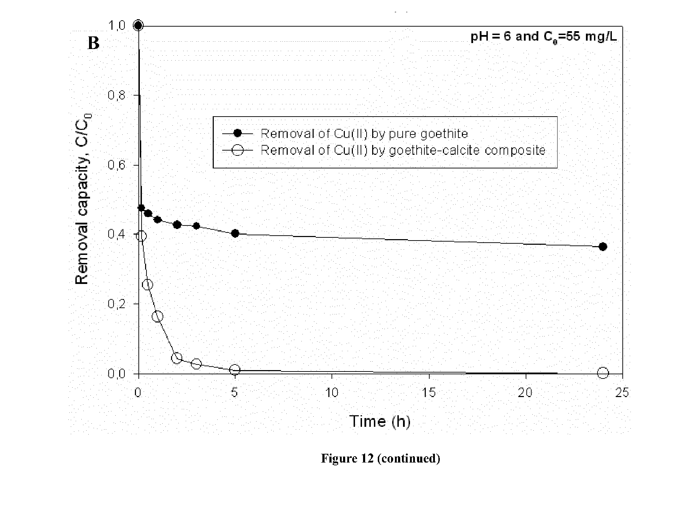

**Figure 12A** **and B** present the removal of Cd(II) and Cu(II) from solutions by pure goethite and goethite-calcite composite. Note that Cd and Cu are almost completely removed from solutions when goethite-calcite composite synthesized at 30°C was used.
**Figure 12A****:** (Cd(II), pH = 6 and C₀ = 59 mg/L).
   Black circles: goethite.
   White circles: composite.
**Figure 12B****:** (Cd(II), pH = 6 and C₀ = 55 mg/L).
   Black circles: goethite.
   White circles: composite.

### EXAMPLES:

### Example 1: Synthesis of goethite-calcite (stirred reactor)

One litre of high-purity water with electrical resistivity of 18.2 MΩ·cm, 1 mol of NaOH and 0.2 mol of FeCl₃.6H₂O were placed in a titanium reactor (autoclave with internal volume of two litres). This aqueous reactive system was immediately stirred using constant mechanical agitation (400 rpm) during the reaction. The aqueous system was then heated at 30 or 70°C for 24h by using a heating jacket adapted to the reactor. After this reaction time, goethite particles with specific textural properties at each temperature were formed as recently reported in Montes-Hernandez et al. [29]. Based on this previous knowledge, the autoclave was disassembled after 24h and 30g of CaCl₂ salt were added into the goethite alkaline suspension. The autoclave was rapidly assembled and; heating and agitation systems were re-started. For this case, the calcium chloride reacted instantaneously with residual NaOH into goethite suspension, leading to formation of portlandite or calcium hydroxide particles (2NaOH + CaCl₂→Ca(OH)₂ + 2NaCl). When the reaction temperature was stabilized at 30°C or 70°C, 20 bar of CO₂ were injected into goethite-portlandite suspension. Immediately, a carbonation process of portlandite took place (Ca(OH)₂ + CO₂→CaCO₃+H₂O). In the last five years, this triphasic gas-liquid-solid carbonation reaction has been specifically studied by Montes-Hernandez et al. [24-25, 30] using systematically commercial portlandite as solid reactant. The equilibrium of carbonation (monitored by a pressure drop of CO₂) was reached after about 8h but the reaction was stopped after 24h for both cases (i.e. at 30 and 70°C).

At the end of the experiment, the autoclave was removed from heating system and immersed into cold water when experiment was carried out at 70°C. After water cooling at 30°C (about 10 minutes) the autoclave was disassembled, and the solid product was carefully recovered and separated by centrifugation (30 minutes at 12,000 rpm), decanting the supernatant solutions. The solid product from both syntheses (i.e. at 30 and 70°C) was washed twice by redispersion/centrifugation processes in order to remove the halite (NaCl) co-precipitated during the synthesis. Finally, the solid product was dried directly in the centrifugation flasks at 60°C for 48 h. The dry solid product was manually recovered, weighed and stored in plastic flasks for further characterizations (FESEM, TEM, XRD, TGA and N₂ sorption isotherms).

### Example 2: Characterization of goethite-calcite composite

### Example 2.1:FESEM and TEM observations:

Pure goethite and goethite-calcite composites were dispersed by ultrasonic treatment in absolute ethanol for five to ten minutes. One or two drops of suspension were then deposited directly on an aluminium support for SEM observations, and coated with platinum. Morphological observations of various selected powders were performed using a Zeiss Ultra 55 field emission gun scanning electron microscope (FESEM) that has a maximum spatial resolution of approximately 1nm at 15kV. Composite also dispersed by ultrasonic treatment in ethanol and oriented on carbon Ni grids were imaged using a JEOL 3010 Transmission Electron Microscope (TEM) equipped with an energy dispersive X-ray analyzer (EDS).

Figures 2A to 2D present the FESEM images of composites synthesized at 30°C and 70°C.

### Example 2.2:XRD measurements:

X-Ray Powder Diffraction (XRD) analyses were performed using a D5000, SIEMENS diffractometer in Bragg-Brentano geometry; equipped with a goniometer theta-theta with a rotating sample holder. The XRD patterns were collected using Cu kα₁ (λ_{kα1}=1.5406Ǻ) and kα₂ (λ_{kα2}=1.5444 Ǻ) radiation in the range 20 = 10 - 70° with a step size of 0.04° and a counting time of 6 seconds per step.

### Example 2.3:Thermogravimetric analyses:

TGA for goethite-calcite composites were performed with a TGA/SDTA 851^{e} Mettler Toledo instrument under the following conditions: sample mass of about 10 mg, alumina crucible of 150 µ1 with a pinhole, heating rate of 10 °C min⁻¹, and inert N₂ atmosphere of 50 ml min⁻¹. Sample mass loss and associated thermal effects were obtained by TGA/SDTA. In order to identify the different mass loss steps, the TGA first derivative (rate of mass loss) was used. TGA apparatus was calibrated in terms of mass and temperature. Calcium oxalate was used for the sample mass calibration. The melting points of three compounds (indium, aluminium and copper) obtained from the DTA signals were used for the sample temperature calibration.

*N₂ sorption isotherms*: N₂ sorption isotherms for goethite-calcite composites were performed by using a sorptomatic system (Thermo Electron Corporation). The specific surface area of powdered samples was estimated by applying the Brunauer-Emmet-Teller (BET) equation in the 0.05≤P/P₀≤0.35 interval of relative pressure and by using 16.2 Å² for cross-sectional area of molecular N₂. A non-linear regression by the least-squares method was performed to fit the interval data (*n_{ads} vs. P*/*P₀*) in the experimental isotherms.

### Conclusion:

The XRD patterns have confirmed the goethite and calcite mineral composition in composite precipitated at 30 and 70°C (see for example Figure 3). These results were also evidenced by TGA. For this case, the 1^{st} derivative curve, which corresponds to the rate of weight loss, clearly shows two major dehydration episodes, the desorption of molecular water and the dehydroxylation processes peaking between 55-70°C and between 225-280°C, respectively. The calcination or de-carbonation of calcite (*CaCO*₃ → *CaO* + *CO*₂ ) takes place at higher temperature and two or three decarbonation episodes were identified between 570 and 770°C (Figure 4A and 4B). Conversely, pure calcite synthesized via reaction (2) and (3) was characterized by a single decarbonation episode peaking at a temperature close to 800°C (see Figure 5). This disagreement can be explained by smaller calcite particles in composite and by the presence of amorphous calcium carbonate with lower thermal stability. Finally, based on TGA, a goethite/calcite weight ratio equal to 0.8 was determined in the composite. Complementary FESEM observations/measurements have revealed nanosized goethite particles well dispersed and/or aggregated with sub-micrometric calcite particles and poorly-crystallized particles (possibly amorphous calcium carbonate). The average particle size (length and width for goethite and diagonal for calcite) measured on 50 isolated particles are summarized in Table 1 below. This mineral mixture forms a homogeneous orange-brown nanocomposite with high specific surface area equal to 92 and 45 m²/g for composite synthesized at 30 and 70°C, respectively (Figure 6). Both values were determined by using the conventional Brunauer-Emmet-Teller method on N₂ sorption isotherms.

**Table 1. Average size of single goethite and calcite crystals measured manually on the 50 isolated particles from FESEM images; and specific surface area of goethite-calcite composites determined from N₂ adsorption isotherms.**

| | | **FESEM** | | | |
|---|---|---|---|---|---|
| **Synthesis** | **Temperature** | **Goethite** | | **Calcite** | **S_{BET}** |
| | | **Length (nm)** | **Width (nm)** | **Diagonal (nm)** | |
| G-C30C | 30°C | 240±40 | 40±8 | 190±30 | 92 m²/g |
| G-C70C | 70°C | 700±0 | 75±20 | 500±40 | 45 m²/g |

### Example 3: Adsorption experiments in a semi-continuous mixed reactor

One litre of solution containing simultaneously high concentration of two ions (As(III)-Se(IV), As(V)-Se(VI) or Cd(II)-Cu(II): about 50mg atom/L for each ion) and 3g of goethite-calcite composite were placed in a titanium reactor (autoclave with internal volume of two litres). This suspension was immediately stirred using constant mechanical agitation (400 rpm) during adsorption process at room temperature (≈20°C). About 15 ml of dispersion were sampled into the reactor as a function of time (0.16, 0.5, 1, 2, 3 and 24h). We note that Argon gas was injected (10bar) in each dispersion sampling. In fact, this gas pressure and the constant agitation allow a constant liquid/solid ratio in each sampling. The pH was measured into the suspensions at room temperature. Then, the suspensions were filtered through a 0.2 µm Teflon filter. 10 ml of resultant filtered solutions were acidified for measurement of [Ca], [Fe], [Na], [As], [Se], [Cd] and [Cu] by inductively coupled plasma optical emission spectrometry (ICP-OES). In these adsorption experiments only the goethite-calcite composite synthesized at 30°C was used because it has higher specific surface (92 m²/g).

### Conclusion:

Adsorption experiments in a semi-continuous reactor and ICP-OES measurements have revealed that goethite-calcite composite has a good removal capacity for Cu>Cd>As(III)>Se(IV)>As(V) in the pH range from 6 to 10.

Conversely, Se(VI) did not present any chemical affinity with goethite-calcite composite at the studied physicochemical conditions. Pure goethite and calcite were also inefficient adsorbents to remove the Se(VI) from water at the same physicochemical conditions. Figures 9A to 9C summarize the simultaneous removal of three different binary-element systems using goethite-calcite composite as adsorbent. Herein, an adsorption competition and a different chemical affinity for the six toxic ions (selenite, selenate, arsenite, arsenate, cadmium and copper) were clearly observed at the investigated physicochemical conditions.

In this study, it was observed that removal of the As(III) was favoured with respect to Se(IV) at alkaline pH (pH=9.4). Conversely, the removal of Se(IV) was favoured with respect to As(III) at slight acidic pH (pH=6) (see Figure 10). Finally, it has been demonstrated that the removal capacity for goethite-calcite composite was better or equivalent compared with pure goethite (see Figure 11), with a main improvement that the nanocomposite is easier to separate from fluid because of the aggregation of goethite with calcite particles. This aggregation process is determined by the balance of electrostatic forces, van der Waals forces and steric interactions at the nanoparticles-fluid interfaces.

Another important advantage is that the goethite-calcite composite can neutralise the acidic wastewaters by slight calcite dissolution, enhancing the removal of heavy metals (e.g. Cu and Cd) at the solid-solution interfaces, with a preferential chemical affinity onto calcite surfaces as clearly observed in Fig. 12A to 12B for cadmium and copper.

## Claims

1. Pure goethite calcite composite under crystal form comprising nanosized goethite particles and sub-micrometric calcite particles, substantially free of amorphous materials such as amorphous calcium carbonate and free of goethite and calcite particles the size of which is higher than 1µm, the goethite/calcite particles weight ratio being comprised from 0.7 to 0.9, in particular 0.8.

2. Pure goethite calcite composite according to claim 1, wherein said composite is substantially free of hematite, portlandite, halite or calcium iron oxide chloride hydrate.

3. Pure goethite calcite composite according to claim 1 or 2, wherein said composite has a specific surface area comprised from about 10 m²/g to about 200 m²/g, preferably from about 40 m²/g to about 200 m²/g, in particular from about 40 m²/g to about 100 m²/g, as determined by N₂ adsorption isotherms.

4. Pure goethite calcite composite according to claim 3, wherein said specific surface area is about 92 m²/g, as determined by N₂ adsorption isotherms.

5. Pure goethite calcite composite according to claim 3 or 4, wherein:
the average length of said goethite particles is comprised from about 200 nm to about 280 nm, in particular about 240 nm,
the average width of said goethite particles is comprised from about 32 nm to about 48 nm, in particular about 40 nm, and
the average diagonal of calcite particles is comprised from about 160 nm to about 220 nm, in particular about 190 nm,
as determined by field emission gun scanning electron microscope.

6. Pure goethite calcite composite according to claim 3, wherein said specific surface area is about 45 m²/g, as determined by N₂ adsorption isotherms.

7. Pure goethite calcite composite according to claim 3 or 6, wherein:
the average length of said goethite particles is comprised from about 650 nm to about 750 nm, in particular about 700 nm,
the average width of said goethite particles is comprised from about 55 nm to about 95 nm, in particular about 75 nm, and
the average diagonal of calcite particles is comprised from about 160 nm to about 220 nm, in particular about 190 nm,
as determined by field emission gun scanning electron microscope.

8. Process of preparation of a pure goethite calcite composite as defined in claims 1 to 7, comprising a step of contacting a goethite particles-portlandite aqueous suspension with a CO₂ source in a medium having a pH higher than 12, in particular 12.2 at a T3 temperature comprised from about 25°C to about 100°C, during a t₃ time comprised from about 1h to about 24h, in particular 8h,

9. Process of preparation of a pure goethite calcite composite according to claim 8, wherein the CO₂ source in the medium is at an initial pressure comprised from about 10 bar to about 30 bar, in particular 20 bar.

10. Process of preparation of a pure goethite calcite composite according to claim 8 or 9, comprising further before the step of contacting said goethite particles-portlandite suspension with a CO₂ source, a step of contacting a goethite particle suspension with CaCl₂ in a medium having a pH higher than 12, in particular 13.5 and containing a base, in particular NaOH, at a T2 temperature comprised from about 25°C to about 100°C, during a t₂ time comprised from about 30 minutes to about 2h, in particular 1h.

11. Process of preparation of a pure goethite calcite composite according to claim 10, comprising further before the step of contacting goethite particle suspension with CaCl₂, a step of introducing FeCl₃ in a medium having a pH higher than 12, in particular 13.5 and containing a base, at a T1 temperature comprised from about 25°C to about 100°C, during a t₁ time comprised from about 1h to about 30h, in particular 24h, said base being in particular selected from the group consisting of NaOH, KOH, LiOH, Ca(OH)₂ and RbOH, or a mixture thereof, preferentially NaOH, preferably at a molar ratio NaOH/FeCl₃ comprised from 3 to 10, in particular 5.

12. Process of preparation of a pure goethite calcite composite according to anyone of claim 8 to 11, comprising the following steps:
a. introducing FeCl₃ in a medium having a pH higher than 12, in particular 13.5 and containing a base, in particular NaOH, at a T1 temperature comprised from about 25°C to about 100°C, during a t₁ time comprised from about 1h to about 30h, in particular 24h, to obtain a goethite particle suspension;
b. contacting said goethite particle suspension with CaCl₂ to obtain a goethite particle-CaCl₂ suspension and heat said goethite particle-CaCl₂ suspension at a T2 temperature comprised from about 25°C to about 100°C, during a t₂ time comprised from about 30 minutes to about 2h, in particular 1h, to obtain said goethite particles-portlandite suspension;
c. contacting said goethite particles-portlandite suspension with a CO₂ source at a T3 temperature comprised from about 25°C to about 100°C, during a t₃ time comprised from about 1h to about 30h, in particular 24h to obtain said goethite calcite composite.

13. Process of preparation of a pure goethite calcite composite according claim 12, wherein said T1, T2 and T3 temperatures are all about 70°C and the specific surface area of said pure goethite calcite composite is about 92 m²/g, as determined by N₂ adsorption isotherms, or said T1, T2 and T3 temperatures are all about 30°C and the specific surface area of said pure goethite calcite composite is about 45 m²/g, as determined by N₂ adsorption isotherms.

14. Use of a pure goethite calcite composite as defined in claims 1 to 7, for the removal of toxic ions from water, in particular selected from the group consisting of Cu, Cd, As, Se, with the proviso that Se(VI) is excluded,
said removal being in particular a simultaneous removal of at least two toxic ions, in particular Cu(II)-Cd (II) or As(III)-Se(IV), or
said removal is in particular liable to separate at least one ion from the Se(VI) ion, in particular at least one ion selected from the group consisting ofCu(II)-Cd (II), As(III), Se(IV).

15. Use according to anyone of claims 14, wherein the specific surface area of said pure goethite calcite composite is comprised from about 10 m²/g to about 200 m²/g, preferably from about 40 m²/g to about 200 m²/g, in particular from about 40 m²/g to about 100 m²/g, in particular about 92 m²/g_{.}

16. Use according to anyone of claim 15, wherein the specific surface area of said pure goethite calcite composite is about 92 m²/g and the removal capacity is comprised from 0.5 to 0.1 after at least 20 hours of contacting said toxic ions with pure goethite calcite composite at a pH of said polluted water comprised from 6 to 9.4.
